# EUROPÄISCHE PATENTSCHRIFT

(11) **EP 3 265 762 B1**
(45) Veröffentlichungstag und Bekanntmachung des Hinweises auf die Patenterteilung: **22.09.2021**
(21) Anmeldenummer: 16705471.7
(22) Anmeldetag: 15.02.2016
(51) Int. Cl.: G01F 23/296, G01N 11/16, G01N 9/00

(54) **VIBRONISCHER SENSOR MIT EINEM STELLELEMENT**
VIBRONIC SENSOR HAVING A CONTROL ELEMENT
CAPTEUR VIBRONIQUE PRÉSENTANT UN ÉLÉMENT DE RÉGLAGE

(30) Priorität: 03.03.2015 DE 102015103071
(43) Veröffentlichungstag der Anmeldung: 10.01.2018
(73) Patentinhaber: Endress+Hauser SE+Co. KG, 79689 Maulburg (DE)
(72) Erfinder: KUHNEN, Raphael, 79418 Schliengen (DE); IBRAHIM, Mohd Syafiq Affendi, 76133 Karlsruhe (DE); FRÜHAUF, Dietmar, 79539 Lörrach (DE)
(74) Vertreter: Andres, Angelika Maria
(86) Internationale Anmeldenummer: PCT/EP2016/053090
(87) Internationale Veröffentlichungsnummer: WO 2016/139051

(56) Entgegenhaltungen:
- EP-A2- 0 161 397
- WO-A2-2005/085770
- DE-A1-102004 028 068
- DE-C1- 19 651 362
- US-A1- 2002 029 823
- US-A1- 2011 166 802

## Beschreibung

Die Erfindung betrifft einen vibronischen Sensor zur Bestimmung und/oder Überwachung zumindest einer Prozessgröße eines Mediums in einem Behältnis zumindest umfassend eine schwingfähige Einheit, eine Antriebs-/Empfangseinheit und eine Elektronikeinheit. Das Behältnis ist beispielsweise ein Behälter, ein Tank, oder auch eine Rohrleitung. Die Prozessgröße kann beispielsweise ein vorgegebener Füllstand des Mediums in dem Behältnis, oder auch die Dichte oder die Viskosität des Mediums sein.

Solche, auch als vibronische Sensoren bezeichnete Feldgeräte, weisen insbesondere im Falle von Füllstandsmessgeräten als schwingfähige Einheit beispielsweise eine Schwinggabel, einen Einstab oder eine Membran auf. Die schwingfähige Einheit wird im Betrieb mittels einer Antriebs-/Empfangseinheit, üblicherweise in Form einer elektromechanischen Wandlereinheit, zu mechanischen Schwingungen angeregt, welche wiederum beispielsweise ein piezoelektrischer Antrieb oder ein elektromagnetischer Antrieb sein kann.

Entsprechende Feldgeräte werden von der Anmelderin in großer Vielfalt hergestellt und beispielsweise unter der Bezeichnung LIQUIPHANT oder SOLIPHANT vertrieben. Die zugrundeliegenden Messprinzipien sind im Grunde bekannt. Die Antriebs-/Empfangseinheit regt die mechanisch schwingfähige Einheit mittels eines elektrischen Anregesignals zu mechanischen Schwingungen an. Umgekehrt empfängt die Antriebs-/Empfangseinheit die mechanischen Schwingungen der mechanisch schwingfähigen Einheit und wandelt diese in ein elektrisches Empfangssignal um. Bei der Antriebs-/Empfangseinheit handelt es sich entsprechend entweder um eine separate Antriebseinheit und eine separate Empfangseinheit, oder um eine kombinierte Antriebs-/Empfangseinheit.

Sowohl das Anregesignal als auch das Empfangssignal sind charakterisiert durch ihre Frequenz, Amplitude und/oder Phase. Änderungen in diesen Größen werden dann üblicherweise zur Bestimmung der jeweiligen Prozessgröße herangezogen. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dann beispielsweise bei einem in der Regel für flüssige Medien eingesetzten LIQUIPHANT Feldgerät anhand unterschiedlicher Resonanzfrequenzen, also einer Frequenzverschiebung, und bei dem hauptsächlich bei Schüttgütern verwendeten SOLIPHANT Feldgerät anhand einer Änderung der Schwingungsamplitude, unterschieden.

Der Vorteil bei der Verwendung einer Schwinggabel als mechanisch schwingfähiger Einheit besteht darin, dass die beiden Gabelzinken gegenphasige Schwingungen ausführen derart, dass keine Energie oder Kraft von den Gabelzinken auf einen Einspannbereich, mittels welchem die Schwinggabel mit einer Membran verbunden ist, übertragen wird. Dagegen ist es für Anwendungsbereiche, bei denen beispielsweise Medium zwischen den Gabelzinken verklemmen könnte, interessant, einen sogenannten Einstab zu verwenden. Dieser wiederum weist jedoch in Hinblick auf die Signalstabilität sowie in Bezug auf die Kompensation von Kräften auf den Einspannbereich im Vergleich zu einer Schwinggabel gegebenenfalls Nachteile auf.

Verschiedene Ausgestaltungen für einen vibronischen Sensor mit einem Einstab als schwingfähiger Einheit sind beispielsweise aus den Druckschriften DE3011603A1 oder DE3625779C2 bekannt geworden. Die schwingfähige Einheit umfasst zwei Schwingstäbe von denen wenigstens der eine Schwingstab rohrförmig ist und den anderen Schwingstab koaxial umschließt, also einen inneren und einen äußeren Schwingstab. Darüber hinaus ist jeder der beiden Schwingstäbe über ein als Rückstellfeder wirkendes elastisches Halteteil an einem gemeinsamen Träger so befestigt, dass er Schwingungen quer zu seiner Längsrichtung ausführen kann. Jeder Schwingstab bildet also mit dem elastischen Halteteil ein mechanisches Schwingungssystem, dessen Eigenresonanzfrequenz durch das Massenträgheitsmoment des Schwingstabs sowie die Federkonstante des elastischen Halteteils bestimmt ist. Damit keine Reaktionskräfte auf die Einspannvorrichtung wirken, wodurch unter anderem Schwingungsenergie verloren geht, sind die beiden Schwingstäbe bzw. die beiden Schwingungssysteme üblicherweise derart ausgestaltet, dass sie ohne Kontakt zu einem Medium die gleiche Eigenresonanzfrequenz aufweisen und gegensinnige Schwingungen ausführen. Bei gegebener Anregeleistung ist dann die Schwingungsamplitude maximal. Bei Bedeckung mit Medium dagegen wird die Schwingungsamplitude gedämpft, oder bricht ab. Entsprechend ist die Amplitudendämpfung ein Maß für den Füllstand.

Nun ist es jedoch so, dass sich aufgrund von Ansatzbildung oder Korrosion am äußeren Schwingstab durch den stetigen Kontakt mit Medium die Eigenresonanzfrequenz des äußeren Schwingstabs, bzw. des äußeren Schwingungssystems verändert. Durch Ansatz vergrößert sich beispielsweise die Masse des äußeren Schwingungssystems und damit einhergehend dessen Massenträgheitsmoment. Dann sind die Eigenresonanzfrequenzen des äußeren und des inneren Schwingungssystems nicht mehr aufeinander abgestimmt, was eine Verringerung der maximalen Schwingungsamplitude zur Folge hat. Entsprechend kann es dazu kommen, dass innerhalb der Elektronikeinheit nicht mehr unterschieden werden kann, ob eine gemessene Verringerung der Schwingungsamplitude durch Ansatzbildung oder durch Erreichen eines bestimmten Füllstandes hervorgerufen wurde.

Um dieses Problem zu bekämpfen, ist beispielsweise aus der DE19651362C1 bekannt geworden, an wenigstens einem der Schwingstäbe eine Kompensationsmasse in der Längsrichtung des Schwingstabs verstellbar anzuordnen, und zum selbsttätigen Abgleich der Eigenresonanzfrequenzen der beiden Schwingstäbe bzw. Schwingungssysteme eine Einstellvorrichtung zur Verstellung der Kompensationsmasse zu integrieren. Je nach konkreter Ausgestaltung der Einstellvorrichtung sind dieser Lösung jedoch Grenzen gesetzt.

Die Eigenresonanzfrequenz eines Schwingstabes ist jedoch auch von den Steifigkeiten der jeweils verwendeten Materialien abhängig. Wie in der WO2005/0885770A2 beschrieben, lässt sich dieser Zusammenhang dahingehend ausnutzen, über die Steifigkeit eines Schwingstabes dessen Eigenresonanzfrequenz gezielt zu variieren.

Für das Beispiel eines vibronischen Sensors mit einem Einstab als schwingfähiger Einheit kann beispielsweise eine in der Steifigkeit veränderliche Einstelleinheit mit mindestens einem der Schwingstäbe gekoppelt werden. Die Einstelleinheit besteht dann wiederum beispielsweise zumindest teilweise aus einem piezoelektrischen oder aus einem magnetostriktiven Material, dessen Steifigkeit mittels einer Steuereinheit elektrisch geregelt werden kann. Im Falle von piezoelektrischem Material sowie entsprechender Elektroden als Einstelleinheit wird die Steifigkeit durch einen elektrischen Strom zwischen den Elektroden verändert. Entweder sind dann die Elektroden frei, so dass kein Strom fließen kann, oder sie sind kurzgeschlossen, wobei die Steifigkeit im kurzgeschlossenen Zustand am geringsten ist. Wird dagegen ein magnetostriktives Material verwendet, lässt sich die Steifigkeit dieses Materials dagegen durch ein in der Stärke veränderliches anliegendes Magnetfeld, welches das Material durchsetzt, einstellen. Allerdings sind dafür vergleichsweise große Felder notwendig, was für die Verwendung in Feldgeräten, welche auf eine möglichst geringe Leistungsaufnahme abzielen, von Nachteil sein kann.

Deshalb liegt der vorliegenden Erfindung die Aufgabe zugrunde, einen stromsparenden vibronischen Sensor mit einem Einstab als schwingfähiger Einheit anzugeben, bei welchem die Eigenresonanzfrequenzen des inneren und äußeren Schwingungssystems stufenlos und einfach aufeinander abgeglichen werden können.

Diese Aufgabe wird erfindungsgemäß gelöst durch einen vibronischen Sensor nach Anspruch 1.

Der Grundgedanke der Erfindung besteht also darin, eine Eigenresonanzfrequenz von zumindest einem der beiden Schwingstäbe bzw. Schwingungsstäbe durch Variation von dessen Steifigkeit gezielt zu beeinflussen. Die hierfür erfindungsgemäß eingesetzten sogenannten Giant-Delta-E Materialien, welche einen Giant-Delta-E-Effekt aufweisen, zeichnen sich durch eine hohe Sättigungsmagnetostriktion bei gleichzeitig vergleichbar kleiner Energie der magnetischen Anisotropie aus. Dadurch ergibt sich im Vergleich zu herkömmlichen magnetostriktiven Materialien eine besonders hohe Variation des Elastizitätsmoduls bei einer vergleichsweise geringen Variation der Magnetisierung. Das Elastizitätsmodul und damit die Steifigkeit lassen sich also durch vergleichsweise geringe Variation eines anliegenden magnetischen Feldes variieren. Weil hierfür nur vergleichsweise geringe Felder notwendig sind, zeichnet sich ein entsprechendes Feldgerät durch eine geringe Leistungsaufnahme aus. Dies ist insbesondere vorteilhaft für Feldgeräte mit einer 4-20mA- oder auch NAMUR-Schnittstelle.

In einer bevorzugten Ausgestaltung ist das Material, welches einen Giant-Delta-E-Effekt aufweist, ein amorphes ferromagnetisches Material, insbesondere ein amorphes Metall, oder ein metallisches Glas. Aus dem Fehlen einer Fernordnung in diesen Materialien resultiert die Abwesenheit einer magnetokristallinen Anisotropie, was zum Auftreten des sogenannten Giant-Delta-E-Effekts führt. Wie beispielwese in ""Giant" ΔE-Effect and Magnetomechanical Damping in Amorphous Ferromagnetic Ribbons" von N. P Kobelev et al., und erschienen in phys. Stat. Sol. (a) 102, 773 (1987) beschrieben, hängt die Größenordnung der Elastizitätsänderung ΔE eines Materials ganz allgemein von der Größe der induzierten magnetischen Anisotropie K, sowie von der mechanischen Spannung σ ab und wird besonders groß falls K≈λₛσ, wobei λₛ den Koeffizienten der Magnetostriktion angibt.

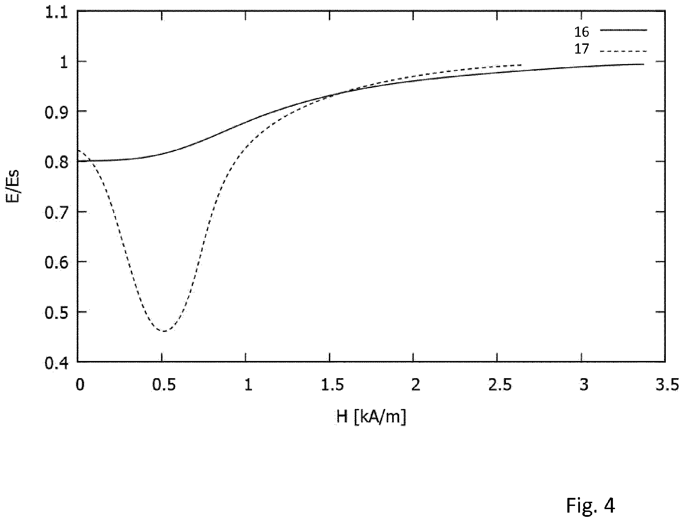

In einer weiteren bevorzugten Ausgestaltung ist das Material, welches einen Giant-Delta-E-Effekt aufweist, eine rapide gekühlte Metallschmelze aus einem magnetostriktiven Material. Dabei ist es von Vorteil, wenn die rapide gekühlte Metallschmelze thermisch, oder thermomagnetisch behandelt ist. Das rapide Abkühlen der Matallschmelzen wird häufig zur Herstellung metallischer Gläser angewendet. Durch Abkühlraten von bis zu 10⁶K/s kann die insbesondere für Metalle typische natürliche Kristallisation verhindert werden. Eine thermische oder thermomagnetische Behandlung reduzieren mechanische Verspannungen und/oder das Auftreten einer Vorzugsrichtung für die Magnetisierung. Die Auswirkungen solcher Behandlungen auf die Größe des Giant-Delta-E Effekts werden noch in Zusammenhang mit Fig. 4 näher beschrieben werden.

Vorteilhaft handelt es sich bei der rapide gekühlten Metallschmelze um ein Bandmaterial, wobei die zumindest eine in der Steifigkeit veränderliche Komponente aus zumindest zwei übereinander angeordneten Schichten des Bandmaterials besteht. Dabei ist es insbesondere von Vorteil, wenn das Bandmaterial laminiert ist. Die zumindest eine in der Steifigkeit veränderliche Komponente kann das beispielsweise durch mehrfaches Umwickeln von zumindest einem anderen Bestandteile des vibronischen Sensors hergestellt werden.

In einer bevorzugten Ausgestaltung weist das Stellelement Mittel zur Erzeugung eines Magnetfelds auf. Dabei ist es von Vorteil, wenn die Mittel zur Erzeugung des Magnetfeldes derart angeordnet sind, dass das Magnetfeld parallel zur Ebene in Längsrichtung des Bandmaterials verläuft. Auf diese Weise ist das Magnetfeld derart ausgerichtet, dass es entlang einer Vorzugsrichtung für die Magnetisierung des Materials verläuft. Die Elastizitätsänderung aufgrund einer Variation des angelegten Magnetfelds wird in diesem Falle maximal.

In einer bevorzugten Ausgestaltung weisen die Mittel zur Erzeugung eines Magnetfelds zumindest eine Spule auf. Mittels einer Spule kann das Magnetfeld auf einfache Weise durch Änderung eines durch die Spule fließenden elektrischen Stroms variiert werden.

Eine besonders bevorzugte Ausgestaltung beinhaltet, dass das Stellelement zumindest teilweise am inneren Schwingstab befestigt ist derart, dass eine Änderung der Steifigkeit des Stellelements eine Änderung einer Resonanzfrequenz des inneren Schwingstabes zur Folge hat. Im Falle, dass sich aufgrund von Ansatzbildung oder Korrosion die Eigenresonanzfrequenz des äußeren Schwingstabes ändert, kann die Eigenresonanzfrequenz des inneren Schwingstabes durch Variation der Steifigkeit derart geändert werden, dass die Eigenresonanzfrequenzen der beiden Schwingstäbe ohne Kontakt mit Medium wieder den gleichen Wert aufweisen.

In einer bevorzugten Ausgestaltung ist die zumindest eine Spule im Inneren des inneren Schwingstabes angeordnet. Ungeachtet der Tatsache, dass die zumindest eine Spule auch außerhalb des inneren Schwingstabs angeordnet sein kann, ist die Anordnung innerhalb des inneren Schwingstabes besonders platzsparend.

Es ist von Vorteil, wenn die Schwingstäbe derart ausgestaltet sind, dass die Resonanzfrequenzen des inneren und äußeren Schwingstabes im Falle, dass die schwingfähige Einheit nicht in Kontakt mit dem Medium ist, im Wesentlichen den gleichen Wert aufweisen. So schwingen die Schwingstäbe ohne Kontakt mit Medium bei gegebener Anregeleistung jeweils mit der maximalen Schwingungsamplitude.

Eine besonders bevorzugte Ausgestaltung der vorliegenden Erfindung beinhaltet, dass die Elektronikeinheit dazu ausgestaltet ist, den Strom durch die Spule anhand der Schwingungsamplitude der schwingfähigen Einheit derart einzustellen, dass die Resonanzfrequenz des inneren Schwingstabes der Resonanzfrequenz des äußeren Schwingstabs entspricht. Es ist also ein Abgleich der Eigenresonanzfrequenzen der beiden Schwingstäbe möglich, der entweder zu ausgewählten Zeitpunkten, oder auch kontinuierlich vorgenommen werden kann. Kann beispielsweise trotz des Abgleichs keine Schwingungsamplitude mehr detektiert werden, kann darauf geschlossen werden, dass die schwingfähige Einheit mit Medium bedeckt ist.

Hierbei ist es von Vorteil, wenn innerhalb der Elektronikeinheit eine Kennlinie hinterlegt ist, welche die Steifigkeit des Stellelements als Funktion einer Eigenresonanzfrequenz der schwingfähigen Einheit angibt, und dass die Frequenz des Anregesignals und anhand der Frequenz des Anregesignals die Steifigkeit derart eingestellt werden, dass die schwingfähige Einheit resonante Schwingungen ausführt. Diese Ausgestaltung nutzt den Zusammenhang zwischen der Steifigkeit des Schwingstabes und dessen Frequenzspektrum aus. Jedem Wert für eine Eigenresonanzfrequenz wird ein Steifigkeitswert und damit ein bestimmter durch die Spule fließender Strom zugeordnet. Auf diese Weise kann ein vibronischer Sensor mit einem Einstab als schwingfähiger Einheit mit deutlich erhöhter Signalstabilität auch für Flüssigkeiten eingesetzt werden. Die Auswertung des Empfangssignals und die Anregung resonanter Schwingungen erfolgt dann analog zu den aus dem Stand der Technik bekannten Anordnungen und Verfahren für eine Schwinggabel als schwingfähiger Einheit, wie beispielhaft in den Druckschriften DE102006034105A1, DE102007013557A1, DE102005015547A1, DE102009026685A1, DE102009028022A1 oder auch DE102010030982A1 beschrieben.

Es ist gegebenenfalls von Vorteil, wenn die schwingfähige Einheit in einer definierten Position innerhalb des Behälters angeordnet ist, derart, dass sie bis zu einer bestimmbaren Eintauchtiefe in das Medium eintaucht. Diese Anordnung erlaubt die Bestimmung der Dichte und/oder der Viskosität, analog zu den Vorgehensweisen, welche in den Druckschriften DE10050299A1, DE102006033819A1, DE102007043811A1, DE10057974A1 oder auch DE102006033819A1 erläutert.

Vorteilhaft handelt es sich bei der Antriebs-/Empfangseinheit um zumindest ein piezoelektrisches Element, oder um eine elektromagnetische Antriebs-/Empfangseinheit.

Die Erfindung sowie ihre vorteilhaften Ausgestaltungen werden nachfolgend anhand der Figuren Fig. 1 - Fig. 4 näher beschrieben. Es zeigt:
Fig. 1: eine schematische Skizze eines vibronischen Sensors gemäß Stand der Technik,
Fig. 2: eine schematische Skizze eines erfindungsgemäßen vibronischen Sensors,
Fig. 3 eine schematische Skizze einer alternativen Ausgestaltung eines erfindungsgemäßen vibronischen Sensors, und
Fig. 4: einen schematischen Verlauf der Änderung des Elastizitätsmoduls als Funktion des Magnetfelds für ein unterschiedlich behandeltes Giant-Delta-E Material.

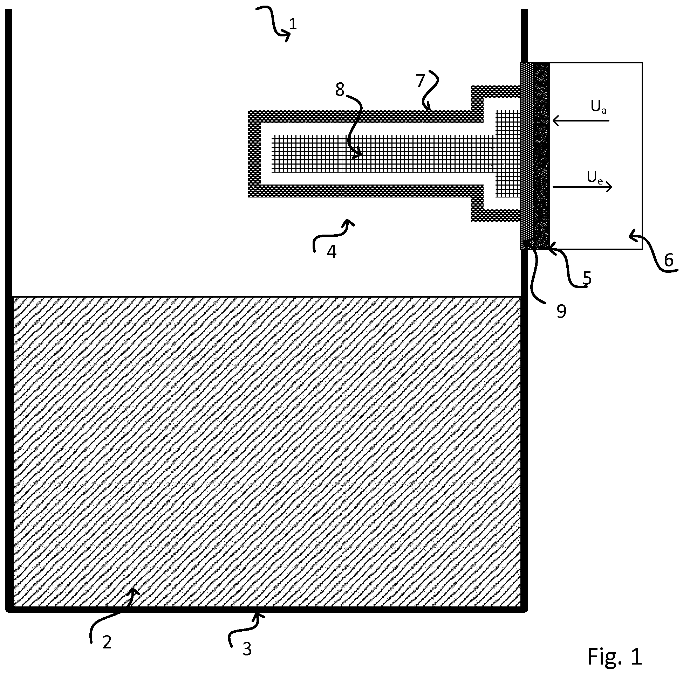

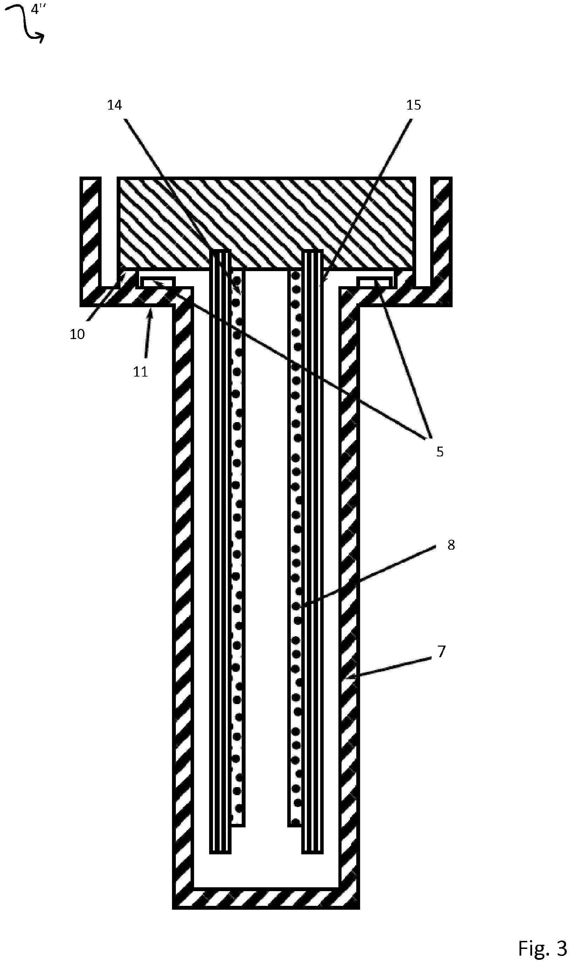

In Fig. 1 ist ein vibronischer Sensor 1 mit einem Einstab als mechanisch schwingfähiger Einheit 4 gezeigt, welcher in einer definierten Höhe an einem teilweise mit Medium 2 gefüllten Behälter 3 angeordnet ist, gezeigt. Die schwingfähige Einheit 4 wird mittels der Antriebs-/Empfangseinheit 5 zu mechanischen Schwingungen angeregt, und kann beispielsweise ein piezoelektrischer Stapel- oder Bimorphantrieb, aber auch ein elektromagnetischer Antrieb sein. Die mechanisch schwingfähige Einheit 4 umfasst einen inneren Schwingstab 8 und einen äußeren Schwingstab 7, wobei der äußere Schwingstab 7 den inneren Schwingstab 8 koaxial umgibt, und mit dem Medium 2 in Kontakt kommt, sobald ein bestimmter Füllstand erreicht wird. Der äußere 7 und der innere Schwingstab 8 sind über einen Träger 9, beispielsweise einer Membran 11 (s. Fig. 3) mechanisch miteinander verbunden.

Weiterhin ist eine Elektronikeinheit 6 dargestellt, mittels welcher die Signalerfassung, -auswertung und/oder -speisung erfolgt. Die Anregung der schwingfähigen Einheit 4 erfolgt mittels eines elektrischen Anregesignals Uₐ, und die jeweilige Prozessgröße wird aus einem elektrischen Empfangssignal Uₑ ermittelt, welches die mechanischen Schwingungen der mechanisch schwingfähigen Einheit 4 wiederspiegelt.

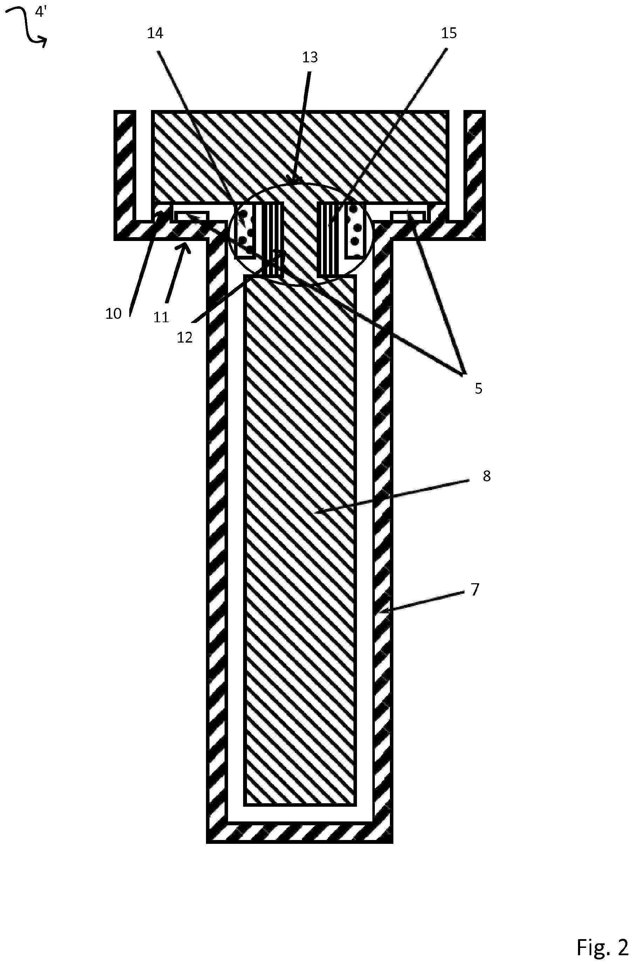

Fig. 2 zeigt eine erste erfindungsgemäße Ausgestaltung einer schwingfähigen Einheit 4'. Der äußere Schwingstab 7 ist über eine Nut 10 auf einer Membran 11 mit dem inneren Schwingstab 8 verbunden. Die Eigenresonanzfrequenz des äußeren Schwingstabs 7 bestimmt sich aus dem Massenträgheitsmoment des äußeren Schwingstabes 7 in Form eines Rohrs und der Federwirkung der Membran 11; die Eigenresonanzfrequenz des inneren Schwingstabes 8 dagegen bestimmt sich aus dem Massenträgheitsmoment des inneren Schwingstabs 8 und aus der Federwirkung des Schwingstabs 8 sowie der Federwirkung im Bereich von dessen Verjüngung 12 an der Anschlussseite zur Membran 11. Dabei werden die Eigenresonanzfrequenzen der beiden Schwingstäbe 7,8 derart abgeglichen, dass sie ohne Kontakt des äußeren Schwingstabs 7 mit dem Medium 2 den gleichen Wert aufweisen. Wird der äußere Schwingstab 7 mittels der Antriebs-/Empfangseinheit 5 in mechanische resonante Schwingungen versetzt, wird der innere Schwingstab 8 über die mechanische Verbindung mit der Membran 11 in gegenphasige mechanische Schwingungen versetzt.

Weiterhin umfasst die erfindungsgemäße schwingfähige Einheit 4' gemäß Fig. 3 ein in der Steifigkeit veränderliches Stellelement 13, welches eine Komponente 15 aus einem Material, welches einen Giant-Delta-E Effekt aufweist, sowie Mittel zum Erzeugen eines Magnetfelds in Form einer Spule 14, welche innerhalb des inneren Schwingstabs 8 angeordnet ist, umfasst. Die Komponente 15 aus dem Material, welches einen Giant-Delta-E Effekt aufweist, ist bevorzugt ein laminiertes Bandmaterial aus einer rapide gekühlten Metallschmelze. Dieses kann beispielsweise um den Bereich der Verjüngung 12 des inneren Schwingstabs 8 gewickelt werden, bis eine gewünschte Dicke erreicht wird. Es versteht sich jedoch von selbst, dass auch andere Anordnungen und Materialien für die Komponente 15 aus einem Material, welches einen Giant-Delta-E Effekt aufweist, möglich sind.

Mittels der Elektronikeinheit 6 (nicht eingezeichnet) kann der Strom durch die Spule 14, und damit einhergehend die Steifigkeit bzw. die Eigenresonanzfrequenz des inneren Schwingstabs 8 derart eingestellt werden, dass die Eigenresonanzfrequenz des inneren Schwingstabs 8 der Eigenresonanzfrequenz des äußeren Schwingstabs 7 entspricht.

Die alternative erfindungsgemäße Ausgestaltung einer schwingfähigen Einheit 4" gemäß Fig. 3 unterscheidet sich von derjenigen aus Fig. 2 lediglich dadurch, dass die Spule 14' nicht außerhalb des inneren Schwingstabs 8, sondern innerhalb des inneren Schwingstabs 8 angeordnet ist. Diese Lösung ist also besonders platzsparend.

Es versteht sich jedoch von selbst, dass auch andere Ausgestaltungen für eine schwingfähige Einheit 4 denkbar sind, welche ebenfalls unter die vorliegende Erfindung fallen.

Vorteilhaft kann ein erfindungsgemäßer vibronischer Sensor 1 mit einer schwingfähigen Einheit 4 in Form eines Einstabs auch in Flüssigkeiten verwendet werden. Im Falle von Flüssigkeiten wird üblicherweise die Frequenz des Empfangssignals Uₑ ausgewertet, welche sowohl durch Ansatzbildung, Korrosion als auch durch den Kontakt mit der jeweiligen Flüssigkeit beeinflusst wird. Durch eine kontinuierliche Anpassung der Steifigkeit des inneren Schwingstabs 8, beispielsweise anhand eines Regelkreises und anhand hinterlegter Kennlinien, kann dann der erfindungsgemäße vibronische Sensor 1 auch in Flüssigkeiten verwendet werden.

Fig. 4 zeigt schließlich schematisch den schematischen Verlauf der Änderung des Elastizitätsmoduls als Funktion des Magnetfelds für ein unterschiedlich behandeltes Giant-Delta-E Material. Die Darstellung erfolgt in Analogie zu der im Artikel ""Giant" ΔE-Effect and Magnetomechanical Damping in Amorphous Ferromagnetic Ribbons" von N. P Kobelev et al., erschienen in phys. Stat. Sol. (a) 102, 773 (1987) beschriebenen. Die durchgezogene Kurve in Fig. 4 zeigt die Änderung des Elastizitätsmoduls einer rapide gekühlten, den Giant-Delta-E Effekt aufweisender Metallschmelze 16. Das gleiche Material zeigt nach einem senkrecht zur Richtung des nachfolgend angelegten Magnetfelds Lösungsglühen, also einer thermomagnetischen Behandlung 17, den mittels der gestrichelten Kurve abgebildeten Verlauf. Die thermomagnetische Behandlung führt zu einer deutlich größeren Änderung des Elastizitätsmoduls bei kleinen Feldstärken und wird somit besonders vorteilhaft für den Einsatz in einem erfindungsgemäßen vibronischen Sensor.

Wie eingangs erwähnt, zeichnen sich sogenannte Giant-Delta-E Materialien durch eine hohe Sättigungsmagnetostriktion bei gleichzeitig vergleichbar kleiner Energie der magnetischen Anisotropie aus. Besonders geeignet sind hier amorphe Materialien, insbesondere rapide gekühlte Metallschmelzen, wie beispielsweise der Firma Metglas Inc. (www.metglas.com) angeboten, insbesondere das Material Metglas® 2605, siehe auch den Artikel "ΔE effect in obliquely field annealed metglas26055C" von P. T. Squire und M. R. J. Gibbs, erschienen in IEEE Transactions On Magnetics, Vol. 25, No. 5 im September 1989. Im Falle unbehandelten Materials liegt die magnetfeldinduzierte Steifigkeitsänderung bei ca. 20%, während diese je nach Behandlung, insbesondere durch eine thermische oder thermomagnetische Behandlung, auf bis zu 55% anwachsen kann. Andere geeignete Materialien sind beispielsweise verschiedene VITROVAC®-Legierungen der Firma Vacuumschmelze, welche im unbehandelten Falle Steifigkeitsänderungen von bis zu 30% aufweisen. Diese Materialien liegen üblicherweise als Bandmaterial vor, und können als laminierte Werkstoffe verwendet werden.

Im Vergleich hierzu weist gemäß dem Artikel "Giant magnetically induced changes in elastic the moduli in Tb.3Dy.7Fe2," aus IEEE Transactions on Sonics and Ultrasonics Su-22(1), SS. 50-52 vom Januar 1975 ein typischer und häufig verwendeter Vertreter der Klasse magnetostriktiver Materialien, Terfenol-D, mit einer Magnetostriktion von in Abhängigkeit der jeweiligen Vorspannung λ≈1000-2000ppm , einen ΔE-Effekt von E/Eₛ≈40% bei einer magnetischen Feldstärke von ca. 340kA/m auf. Bei einem Giant-Delta-E-Material, wie z.B. einer Vitrovac-Legierung, sind im Vergleich um den Faktor 100 geringere Feldstärken für Steifigkeitsänderungen gleicher Größenordnungen notwendig. Bei Wahl eines behandelten Giant-Delta-E-Materials, wie zum Beispiel Metglas 2605 ist beispielsweise zur Erzielung einer zum Material Terfenol-D vergleichbaren Steifigkeitsänderung lediglich eine magnetische Feldstärke von ca. 500A/m notwendig. Dies entspricht bei Verwendung einer Spule von 1cm Länge und etwa 500 Windungen gemäß H=nl/L einem Strom von 1=10mA. Je nach Ausgestaltung des Stellelements erlaubt somit die erfindungsgemäße Lösung das Betreiben des entsprechenden vibronischen Sensors mit einer 4-20mA- oder NAMUR- Schnittstelle. Dies ist bei mit herkömmlichen magnetostriktiven Materialien nicht möglich.

### Bezugszeichenliste

- 1: Vibronischer Sensor
- 2: Medium
- 3: Behälter
- 4: Schwingfähige Einheit
- 5: Antriebs-/Empfangseinheit
- 6: Elektronikeinheit
- 7: äußerer Schwingstab
- 8: innerer Schwingstab
- 9: Träger
- 10: Nut
- 11: Membran
- 12: Verjüngung
- 13: Stellelement
- 14: Spule
- 15: Komponente aus einem Giant-Delta-E Material
- 16: unbehandeltes Giant-Delta-E Material
- 17: thermomagnetisch behandeltes Giant-Delta-E Material

- U_{A}: Anregesignal
- U_{E}: Empfangssignal

## Patentansprüche

1. Vibronischer Sensor (1) zur Überwachung einer Prozessgröße eines Mediums (2) in einem Behältnis (3) zumindest umfassend eine mechanisch schwingfähige Einheit (4), eine Antriebs-/Empfangseinheit (5) und eine Elektronikeinheit (6),
wobei die mechanisch schwingfähige Einheit (4) zwei Schwingstäbe (7,8) und ein mit zumindest einem der Schwingstäbe (7,8) mechanisch verbundenes, in der Steifigkeit veränderliches Stellelement (13) aufweist,
wobei wenigstens der erste, äußeref Schwingstab (7) rohrförmig ist und den zweiten, inneren Schwingstab (8) koaxial umschließt,
wobei jeder der beiden Schwingstäbe (7,8) derart an einer gemeinsamen Membran (11) befestigt ist, dass er Schwingungen quer zu seiner Längsrichtung ausführen kann,
wobei die Antriebs-/Empfangseinheit (5) dazu ausgestaltet ist, anhand eines elektrischen Anregesignals (Uₐ) die beiden Schwingstäbe (7,8) über die Membran (11) zu gegensinnigen, transversalen, mechanischen, resonanten Schwingungen anzuregen, und die Schwingungen der mechanisch schwingfähigen Einheit (4) zu empfangen und in ein elektrisches Empfangssignal (Uₑ) umzuwandeln,
wobei die Elektronikeinheit (6) dazu ausgestaltet ist, die Steifigkeit des Stellelements (13) einzustellen und zumindest aus dem elektrischen Empfangssignal (Uₑ) die zumindest eine Prozessgröße zu ermitteln,
und wobei das Stellelement (13) zumindest eine Komponente (15) aus einem Material umfasst, welches einen Giant-Delta-E-Effekt aufweist.

2. Vibronischer Sensor nach Anspruch 1,
**gekennzeichnet dadurch,**
**dass** das Material, welches einen Giant-Delta-E-Effekt aufweist, ein amorphes ferromagnetisches Material, insbesondere ein amorphes Metall, oder ein metallisches Glas ist.

3. Vibronischer Sensor nach Anspruch 1 oder 2,
**gekennzeichnet dadurch,**
**dass** das Material, welches einen Giant-Delta-E-Effekt aufweist,
eine rapide gekühlte Metallschmelze aus einem magnetostriktiven Material ist.

4. Vibronischer Sensor nach Anspruch 3,
**gekennzeichnet dadurch,**
**dass** die rapide gekühlte Metallschmelze thermisch, oder thermomagnetisch behandelt ist.

5. Vibronischer Sensor nach Anspruch 3 oder 4,
**gekennzeichnet dadurch,**
**dass** es sich bei der rapide gekühlten Metallschmelze um ein Bandmaterial handelt, und dass die zumindest eine in der Steifigkeit veränderliche Komponente aus zumindest zwei übereinander angeordneten Schichten des Bandmaterials besteht.

6. Vibronischer Sensor nach Anspruch 5,
**gekennzeichnet dadurch,**
**dass** das Bandmaterial laminiert ist.

7. Vibronischer Sensor nach zumindest einem der vorhergehenden Ansprüche,
**gekennzeichnet dadurch**
**dass** das Stellelement (13) Mittel zur Erzeugung eines Magnetfelds aufweist.

8. Vibronischer Sensor nach Anspruch 7,
**gekennzeichnet dadurch,**
**dass** die Mittel zur Erzeugung des Magnetfeldes derart angeordnet sind, dass das Magnetfeld parallel zur Ebene in Längsrichtung des Bandmaterials verläuft.

9. Vibronischer Sensor nach Anspruch 7 oder 8,
**gekennzeichnet dadurch**
**dass** die Mittel zur Erzeugung eines Magnetfelds zumindest eine Spule (14) aufweisen.

10. Vibronischer Sensor nach zumindest einem der vorhergehenden Ansprüche,
**gekennzeichnet dadurch**
**dass** das Stellelement (13) zumindest teilweise am inneren Schwingstab (8) befestigt ist derart, dass eine Änderung der Steifigkeit des Stellelements (13) eine Änderung einer Eigenresonanzfrequenz des inneren Schwingstabes (8) zur Folge hat.

11. Vibronischer Sensor nach zumindest einem der vorhergehenden Ansprüche,
**gekennzeichnet dadurch**
**dass** die zumindest eine Spule (14) im Inneren des inneren Schwingstabes (8) angeordnet ist.

12. Vibronischer Sensor nach zumindest einem der vorhergehenden Ansprüche,
**gekennzeichnet dadurch**
**dass** die Schwingstäbe (7,8) derart ausgestaltet sind, dass die Eigenresonanzfrequenzen des inneren (8) und äußeren (7) Schwingstabes im Falle, dass die schwingfähige Einheit (4) nicht in Kontakt mit dem Medium (2) ist, im Wesentlichen den gleichen Wert aufweisen.

13. Vibronischer Sensor nach Anspruch 9 oder 11,
**gekennzeichnet dadurch**
**dass** die Elektronikeinheit (6) dazu ausgestaltet ist, den Strom durch die Spule (14) anhand der Schwingungsamplitude der schwingfähigen Einheit (4) derart einzustellen, dass die Eigenresonanzfrequenz des inneren Schwingstabes (8) der Eigenresonanzfrequenz des äußeren Schwingstabs (7) entspricht.

14. Vibronischer Sensor nach zumindest einem der vorhergehenden Ansprüche,
**gekennzeichnet dadurch**
**dass** innerhalb der Elektronikeinheit (6) eine Kennlinie hinterlegt ist, welche die Steifigkeit des Stellelements (13) als Funktion einer Eigenresonanzfrequenz der schwingfähigen Einheit (4) angibt, und dass die Frequenz des Anregesignals (Uₐ) und anhand der Frequenz des Anregesignals (Uₐ) die Steifigkeit des Stellelements (13) derart eingestellt werden, dass die schwingfähige Einheit (4) resonante Schwingungen ausführt.

15. Vibronischer Sensor nach zumindest einem der vorhergehenden Ansprüche,
**gekennzeichnet dadurch**
**dass** die schwingfähige Einheit (4) in einer definierten Position innerhalb des Behältnisses (3) angeordnet ist, derart, dass sie bis zu einer bestimmbaren Eintauchtiefe in das Medium (2) eintaucht.

16. Vibronischer Sensor nach zumindest einem der vorhergehenden Ansprüche,
**gekennzeichnet dadurch,**
**dass** die Antriebs-/Empfangseinheit (5) zumindest ein piezoelektrisches Element umfasst, oder dass es bei der Antriebs-/Empfangseinheit (5) um eine elektromagnetische Antriebs-/Empfangseinheit handelt.

## Claims

1. Vibronic sensor (1) designed to monitor a process variable of a medium (2) in a vessel (3), wherein said sensor comprises at least a unit that is capable of vibrating mechanically (4), a drive/reception unit (5) and an electronics unit (6),
wherein the unit that is capable of vibrating mechanically (4) has two vibrating rods (7, 8) and an adjustment element (13), wherein said adjustment element is mechanically connected to at least one of the vibrating rods (7, 8) and has a variable rigidity,
wherein at least the first external vibrating rod (7) is tubular and coaxially surrounds the second interior vibrating rod (8),
wherein each of the two vibrating rods (7, 8) is secured to a common membrane (11) in such a way that it can produce vibrations perpendicularly to its longitudinal direction, wherein the drive/reception unit (5) is designed to use an electrical excitation signal (Uₐ) to excite the two vibrating rods (7, 8) to produce opposite, transversal, mechanical, resonant vibrations via the membrane (11), and to receive the vibrations of the unit that is capable of vibrating mechanically (4) and to convert them to an electrical reception signal (Uₑ),
wherein the electronics unit (6) is designed to regulate the rigidity of the adjustment element (13) and to determine the at least one process variable at least from the electrical reception signal (Uₑ),
and wherein the adjustment element (13) at least comprises a component (15) made from a material that has a giant delta E effect.

2. Vibronic sensor as claimed in Claim 1,
**characterized in that**
the material that has a giant delta E effect is an amorphous ferromagnetic material, particularly an amorphous metal or a metallic glass.

3. Vibronic sensor as claimed in Claim 1 or 2,
**characterized in that**
the material that has a giant delta E effect is a rapid cooled molten metal made from a magnetostrictive material.

4. Vibronic sensor as claimed in Claim 3,
**characterized in that**
the rapid cooled molten metal is thermally or thermomagnetically treated.

5. Vibronic sensor as claimed in Claim 3 or 4,
**characterized in that**
the rapid cooled molten metal is a strip material and **in that** the at least one component of variable rigidity consists of at least two layers of the strip material arranged on top of one another.

6. Vibronic sensor as claimed in Claim 5,
**characterized in that**
the strip material is laminated.

7. Vibronic sensor as claimed in at least one of the previous claims,
**characterized in that**
the adjustment element (13) comprises a means to generate a magnetic field.

8. Vibronic sensor as claimed in Claim 7,
**characterized in that**
the means to generate the magnetic field is arranged in such a way that the magnetic field is parallel to the plane in the longitudinal direction of the strip material.

9. Vibronic sensor as claimed in Claim 7 or 8,
**characterized in that**
the means to generate a magnetic field comprises at least a coil (14).

10. Vibronic sensor as claimed in at least one of the previous claims,
**characterized in that**
the adjustment element (13) is at least partially secured to the interior vibrating rod (8) in such a way that a modification of the rigidity of the adjustment element (13) involves a modification of a natural resonance frequency of the interior vibrating rod (8).

11. Vibronic sensor as claimed in at least one of the previous claims,
**characterized in that**
the at least one coil (14) is arranged inside the interior vibrating rod (8).

12. Vibronic sensor as claimed in at least one of the previous claims,
**characterized in that**
the vibrating rods (7, 8) are designed in such a way that the respective natural resonance frequencies of the interior vibrating rod (8) and of the external vibrating rod (7) have essentially the same value in the event that the unit that is capable of vibrating mechanically (4) is not in contact with the medium (2).

13. Vibronic sensor as claimed in Claim 9 or 11,
**characterized in that**
the electronics unit (6) is designed to regulate the current passing through the coil (14) on the basis of the vibration amplitude of the unit that is capable of vibrating mechanically (4) in such a way that the natural resonance frequency of the interior vibrating rod (8) corresponds to the natural resonance frequency of the external vibrating rod (7).

14. Vibronic sensor as claimed in at least one of the previous claims,
**characterized in that**
a characteristic curve is saved in the electronics unit (6) which indicates the rigidity of the adjustment element (13) as a function of a natural resonance frequency of the unit that is capable of vibrating mechanically (4), and that the frequency of the excitation signal (Uₐ) and, on the basis of the frequency of the excitation signal (Uₐ), the rigidity of the adjustment element (13) are regulated in such a way that the unit that is capable of vibrating mechanically (4) performs resonant vibrations.

15. Vibronic sensor as claimed in at least one of the previous claims,
**characterized in that**
the unit that is capable of vibrating mechanically (4) is arranged in a defined position inside the vessel (3) in such a way that it is immersed in the medium (2) as far as a definable immersion depth.

16. Vibronic sensor as claimed in at least one of the previous claims,
**characterized in that**
the drive/reception unit (5) at least comprises a piezoelectric element, or **in that** the drive/reception unit (5) is an electromagnetic drive/reception unit.

## Revendications

1. Capteur vibronique (1) destiné à la surveillance d'une grandeur de process d'un produit (2) dans un réservoir (3), lequel capteur comprend au moins une unité apte à vibrer (4), une unité d'entraînement / de réception (5) et une unité électronique (6),
l'unité apte à vibrer mécaniquement (4) présentant deux tiges vibrantes (7, 8) et un élément de réglage (13), lequel élément de réglage est relié mécaniquement à au moins l'une des tiges vibrantes (7, 8) et présente une rigidité variable,
au moins la première tige vibrante extérieure (7) étant tubulaire et entourant coaxialement la deuxième tige vibrante intérieure (8),
chacune des deux tiges vibrantes (7, 8) étant fixée à une membrane commune (11) de manière à pouvoir exécuter des vibrations perpendiculairement à sa direction longitudinale,
l'unité d'entraînement / de réception (5) étant conçue pour exciter les deux tiges vibrantes (7, 8) par l'intermédiaire de la membrane (11) à des vibrations de résonance mécaniques transversales opposées au moyen d'un signal d'excitation électrique (Uₐ), et pour recevoir les vibrations de l'unité apte à vibrer (4) et les convertir en un signal de réception électrique (Uₑ),
l'unité électronique (6) étant conçue pour régler la rigidité de l'élément de réglage (13) et pour déterminer l'au moins une grandeur de process au moins à partir du signal de réception électrique (Uₑ),
et l'élément de réglage (13) comprenant au moins un composant (15) constitué d'un matériau, lequel matériau présente un effet delta E géant.

2. Capteur vibronique selon la revendication 1,
**caractérisé**
**en ce que** le matériau présentant un effet delta E géant est un matériau ferromagnétique amorphe, notamment un métal amorphe ou un verre métallique.

3. Capteur vibronique selon la revendication 1 ou 2,
**caractérisé**
**en ce que** le matériau, lequel présente un effet delta E géant, est un métal fondu rapidement refroidi d'un matériau magnétostrictif.

4. Capteur vibronique selon la revendication 3,
**caractérisé**
**en ce que** le métal fondu rapidement refroidi est soumis à un traitement thermique ou thermomagnétique.

5. Capteur vibronique selon la revendication 3 ou 4,
**caractérisé**
**en ce que** le métal fondu rapidement refroidi est un matériau en bande et en ce que l'au moins un composant de rigidité variable consiste en au moins deux couches superposées du matériau en bande.

6. Capteur vibronique selon la revendication 5,
**caractérisé**
**en ce que** le matériau en bande est stratifié.

7. Capteur vibronique selon au moins l'une des revendications précédentes,
**caractérisé**
**en ce que** l'élément de réglage (13) comprend des moyens destinés à générer un champ magnétique.

8. Capteur vibronique selon la revendication 7,
**caractérisé**
**en ce que** les moyens destinés à générer le champ magnétique sont disposés de telle sorte que le champ magnétique est parallèle au plan dans la direction longitudinale du matériau en bande.

9. Capteur vibronique selon la revendication 7 ou 8,
**caractérisé**
**en ce que** les moyens destinés à générer un champ magnétique comprennent au moins une bobine (14).

10. Capteur vibronique selon au moins l'une des revendications précédentes,
**caractérisé**
**en ce que** l'élément de réglage (13) est au moins partiellement fixé à la tige vibrante intérieure (8) de telle sorte qu'une modification de la rigidité de l'élément de réglage (13) entraîne une modification d'une fréquence de résonance naturelle de la tige vibrante intérieure (8).

11. Capteur vibronique au moins l'une des revendications précédentes,
**caractérisé**
**en ce que** l'au moins une bobine (14) est disposée à l'intérieur de la tige vibrante intérieure (8).

12. Capteur vibronique selon au moins l'une des revendications précédentes,
**caractérisé**
**en ce que** les tiges vibrantes (7, 8) sont conçues de telle sorte que les fréquences de résonance naturelle respectives de la tige vibrante intérieure (8) et de la tige vibrante extérieure (7) présentent sensiblement la même valeur dans le cas où l'unité apte à vibrer (4) n'est pas en contact avec le produit (2).

13. Capteur vibronique selon la revendication 9 ou 11,
**caractérisé**
**en ce que** l'unité électronique (6) est conçue pour régler le courant à travers la bobine (14) sur la base de l'amplitude de vibration de l'unité apte à vibrer (4) de telle sorte que la fréquence de résonance naturelle de la tige vibrante intérieure (8) correspond à la fréquence de résonance naturelle de la tige vibrante extérieure (7).

14. Capteur vibronique selon au moins l'une des revendications précédentes,
**caractérisé**
**en ce qu'**une courbe caractéristique est mémorisée dans l'unité électronique (6), laquelle courbe caractéristique indique la rigidité de l'élément de réglage (13) en fonction d'une fréquence de résonance naturelle de l'unité apte à vibrer (4), et en ce que la fréquence du signal d'excitation (Uₐ) et, sur la base de la fréquence du signal d'excitation (Uₐ), la rigidité de l'élément de réglage (13) sont réglées de telle sorte que l'unité apte à vibrer (4) exécute des vibrations de résonance.

15. Capteur vibronique selon au moins l'une des revendications précédentes,
**caractérisé**
**en ce que** l'unité apte à vibrer (4) est disposée dans une position définie à l'intérieur du réservoir (3), de telle sorte qu'elle soit immergée jusqu'à une position d'immersion définissable dans le produit (2).

16. Capteur vibronique selon au moins l'une des revendications précédentes,
**caractérisé**
**en ce que** l'unité d'entraînement / de réception comprend au moins un élément piézoélectrique, ou en ce que, concernant l'unité d'entraînement / de réception, il s'agit d'une unité d'entraînement / de réception électromagnétique.
